(19) **Europäisches Patentamt** / **European Patent Office** / **Office européen des brevets**

(11) **EP 4 195 482 A1**

(12) **EUROPEAN PATENT APPLICATION**

(43) Date of publication:
**14.06.2023 Bulletin 2023/24**

(21) Application number: **21213515.6**

(22) Date of filing: **09.12.2021**

(51) International Patent Classification (IPC):
$H02M\ 3/156$ (2006.01)    $H02M\ 3/158$ (2006.01)
$H02M\ 1/00$ (2006.01)    $H02M\ 1/15$ (2006.01)
$H02M\ 1/42$ (2007.01)

(52) Cooperative Patent Classification (CPC):
**H02M 1/0003; H02M 1/0009; H02M 1/0025;
H02M 1/15; H02M 1/4225; H02M 3/156;
H02M 3/1582**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Goodix Technology (HK) Company
Limited
Sheung Shui (HK)**

(72) Inventors:
• **Krabbenborg, Bernardus Henricus**
  **6537 TL Nijmegen (NL)**
• **Segundo Babarro, Jokin**
  **6537 TL Nijmegen (NL)**
• **Berkhout, Marco**
  **6537 TL Nijmegen (NL)**

(74) Representative: **Nederlandsch Octrooibureau
P.O. Box 29720
2502 LS The Hague (NL)**

(54) **FEEDBACK CIRCUIT WITH ADJUSTABLE LOOP GAIN FOR A BOOST CONVERTER**

(57) A feedback circuit for a boost converter wherein the feedback circuit comprises a measurement resistance $R_M$ configured to receive a current $I_{COIL}$ from the boost converter, a feedback resistance $R_{SH}$, a gain circuit $g_M$ comprising a gain output and configured to receive a sensed voltage associated to the measurement resistance, and to provide, at the gain output, a gain signal generated based on the sensed voltage; and a comparison circuit comprising a comparison output, and configured to generate a comparison signal, at the comparison output, wherein the comparison signal is generated based on the gain signal, a voltage drop across the feedback resistance $R_{SH}$ and a reference signal $V_{REF}$.

Fig. 4

EP 4 195 482 A1

**Description**

FIELD OF THE INVENTION

The invention relates to a feedback circuit for a boost converter with adjustable loop gain. The invention further relates to a boost converter circuit comprising the feedback circuit with adjustable loop gain and to a method of operating the feedback circuit with adjustable loop gain.

BACKGROUND OF THE INVENTION

Energy harvesting is the process by which energy is derived from external sources, captured, and stored for small, wireless autonomous devices, like those used in wearable electronics and wireless sensor networks. A direct current to direct current 'DC-to-DC' converter circuits, such as boost converter circuits, are electronic circuits that convert a source of direct current (DC) from one voltage level to another voltage by first charging an energy storage element using an input voltage and then discharging the energy storage element to provide the energy at the output of the DC-to-DC converter. DC-to-DC converters can be used to increase the amount of energy harvested from an energy source. Constant-On-Time (COT) boost converters are popular for its simplicity and high performance in both continuous conduction mode (CCM) and discontinuous conduction mode (DCM). COT boost converters use feedback circuits to control the switching of the boost circuit. These feedback circuits need to comply with certain stability requirements in order to work properly. As the stability criteria depends on the value of some of the components of the boost converter circuit for a given target output voltage, the stability criteria is met at the price of efficiency and/or costs.

Xiaoru Xu, Xiaobo Wu, Xiaolang Yan, " A Quasi Fixed Frequency Constant On Time Controlled Boost Converter," IEEE International Symposium on Circuits and Systems, ISCAS 2008, discloses a COT boost converter circuit wherein, for a given battery voltage $V_{BAT}$ as input, a given inductor $L_{BST}$ and a given target current $I_{LOAD}$, a requirement for stability contradicts with requirements for cost, i.e. a low value of the capacitor $C_{BST}$ at the output, and efficiency, i.e. a low value of the measurement resistor $R_M$). I.e., stability can only be reached at expenses of efficiency or cost. An obvious way to prevent the contradictory requirements is the use a different kind of converter topology, but that eliminates all the simplicity and performance advantages of the COT topology.

Jinping Wang, Liangkui Hou, Liang Zhang, Sheng Xiang, and Yigang He, "Analysis of the Low-frequency Oscillation Phenomenon in Constant-on-time Controlled Boost Converter", IEEE Energy Conversion Congress and Exposition, ECCE 2015 discloses a method that consists on relocating the measurement resistance $R_M$ of the feedback circuit in series with the output capacitor $C_{BST}$. In this way, the dissipation is moved to the output capacitor $C_{BST}$. However, this does not improve efficiency and makes the stability dependent on the parasitic of an external component, i.e. on the output capacitor $C_{BST}$. Moreover, the stability requirements still depend on the measurement value of the resistance $R_M$. Furthermore, this configuration also introduces a high unwanted ripple on the output voltage $V_{BST}$.

It would be advantageous to implement a low cost efficient feedback circuit for a boost converter circuit that still meets the required stability criteria.

SUMMARY OF THE INVENTION

An object of the invention is to implement a stable boost converter circuit in an efficient and cost-effective way.

The invention relates to a feedback circuit for a boost converter circuit wherein the feedback circuit comprises a measurement resistance $R_M$ configured to receive a current $I_{COIL}$ from the boost converter, a feedback resistance $R_{SH}$, a gain circuit $g_M$ comprising a gain output and configured to receive a sensed voltage associated to the measurement resistance, and to provide, at the gain output, a gain signal $I_M$ generated based on the sensed voltage; and a comparison circuit comprising a comparison output, and configured to generate a comparison signal, at the comparison output, wherein the comparison signal is generated based on the gain signal, a voltage drop across the feedback resistance $R_{SH}$ and a reference signal $V_{REF}$. In this way, the gain circuit introduces a gain at the comparison circuit which allows to meet the required stability criteria in an efficient and simple way. This allows to extend the load current range for a constant-on-time boost converter circuit beyond the limits normally dominated by external components, battery voltage and switch resistance. This means that the maximum load current can be increased to levels where a conventional converter would not be stable, or would need a higher measurement resistance value by choosing a high Effective Series Resistance (ESR) in the output capacitance, resulting in power loss and high ripple voltage, or a high switch resistance resulting in high power losses, or would need a higher output capacitance value, or would need a lower inductor value resulting in higher ripple current amplitude. Furthermore, the gain setting can be used to optimize the balance between cost (external capacitance), efficiency (measurement resistance, ESR), performance (output resistance, ripple voltage, ripple current) and for a given use case (load current, battery voltage). Also the use of capacitor in the feedback circuit is prevented such that the feedback circuit can be smaller compared to a feedbcak circuit using a capacitor suited for the whole voltage range.

The measurement resistance $R_M$ may comprise a first end and a second end, the gain circuit may comprise a first gain input and a second gain input and wherein the gain circuit may be configured to receive, at the first gain input, a first voltage sensed at the first end of the measurement resistance, to receive, at the second gain input, a second voltage sensed at the second end of the measurement resistance, and to provide, at the gain output, the gain signal $I_M$ generated based on the first sensed voltage and the second sensed voltage. This is a suitable way to connect the gain circuit such that the gain can be provided at the inputs of the comparison circuit in an efficient way.

The feedback resistance $R_{SH}$ may comprise a first end and a second end and wherein the first end of the feedback resistance $R_{SH}$ may be coupled to the second end of the measurement resistance, the second end of the feedback resistance ($R_{SH}$) may be coupled to the comparison circuit and the gain output may be coupled to the comparison circuit. Again, this allows for providing the gain at the inputs of the comparison circuit in an efficient way.

The comparison circuit may comprise a first comparison input, a second comparison input and a comparison output, wherein the comparison circuit may be configured to receive the reference voltage at the first input, to receive a feedback signal at the second input, and to generate the comparison signal by comparing the feedback signal and the reference signal, wherein the feedback signal may be based on the gain signal and the voltage drop across the feedback resistance. This provides the gain at the input of the comparison circuit in a suitable and efficient manner, thereby saving in resources.

The gain output may be coupled to the second end of the feedback resistance and to the second comparison input. This is a suitable manner of connecting the gain output to provide the gain at the input of the comparison circuit.

The feedback circuit may comprise another feedback resistance configured to receive the gain signal wherein the comparison circuit may comprise a first comparison input, a second comparison input and a comparison output, wherein the comparison circuit is configured to receive, at the first comparison input, the sum of the reference voltage and a further voltage drop caused by the gain signal across the another feedback resistance, to receive the voltage drop across the feedback resistance $R_{SH}$ at the second comparison input and to generate the comparison signal by comparing the sum of the reference voltage and the further voltage drop with the voltage drop across the feedback resistance $R_{SH}$. This allows to provide the gain to the circuit independently of the value of $R_{SH}$.

The another feedback resistance may comprise a first and a second end wherein the first comparison input may be coupled to the first end of the another feedback resistance and to the gain output and wherein the second end of the another feedback resistance may be coupled to the reference voltage.

The gain circuit may comprise a voltage controlled current source. This is a suitable implementation of the gain circuit.

The first end of the feedback resistance $R_{SH}$ may be coupled to an output terminal $V_{BST}$ of the boost converter.

The feedback circuit may further comprise a measurement switch $S_M$ wherein the measurement switch $S_M$ and the measurement resistance $R_M$ may be coupled in series, wherein the measurement switch $S_M$ and the measurement resistance $R_M$ may be coupled in parallel with a first switch $S_H$ of the boost converter, wherein the first switch $S_H$ comprises an on-resistance $R_H$ when the first switch $S_H$ is closed, and wherein the feedback switch $S_M$ and the first switch $S_H$ of the boost converter circuit may be configured to open and close at the same time. This allows to reduce dissipation at the output because prevents energy loss at the measurement resistance by re-using the on-resistance $R_H$ of the switch $S_H$ which is present anyway. The measurement $R_M$ is no longer in the high current path, and with an additional switch $S_M$, that switches simultaneously with switch $S_H$, the voltage across the switch $S_H$ and the on-resistance $R_H$ is sensed when both switches $S_H$ and $S_M$ are closed. The measurement resistance $R_M$ can now be chosen much larger so that the power loss in the measurement resistance $R_M$ can be neglected.

The feedback circuit may further comprise an adjustable current source coupled to the second end of the feedback resistance and to the second comparison input of the comparison circuit. This is a suitable way of adjusting the voltage at the output to the required value. Alternatively, the feedback circuit may comprise a current DAC controlled by a digital word or a voltage controlled current source controlled by a control voltage or a current controlled current source controlled with a control current.

The invention also relates to a boost converter circuit comprising a feedback circuit.

The invention relates as well to a method of operating a feedback circuit for a boost converter circuit.

The person skilled in the art will understand that the features described above may be combined in any way deemed useful. Moreover, modifications and variations described in respect of the system may likewise be applied to a method.

BRIEF DESCRIPTION OF THE DRAWINGS

In the following, aspects of the invention will be elucidated by means of examples, with reference to the drawings. The drawings are diagrammatic and are not drawn to scale.

Fig. 1 shows a known boost converter circuit.

Figs. 2A-B and 3A-B show diagrams of time waveforms of several signals of the boost converter circuit of Fig. 1 during operation.

Fig. 4 shows a feedback circuit according to an embodiment of the invention.

Fig. 5 shows a boost converter circuit comprising the feedback circuit of fig. 4.

Fig. 6 shows another feedback circuit according to another embodiment of the invention.

Fig. 7 shows a boost converter circuit comprising the feedback of fig. 6.

Fig. 8 shows a boost converter circuit comprising a feedback circuit according to another embodiment of the invention.

Figs. 9A-B show time diagrams of the waveforms of several signals of the boost converter circuit 800 of fig. 8 during operation.

Figs. 10 and 11 show examples of implementations of the boost converter circuit of fig. 8.

Fig. 12 shows a flowchart of a method of operating the feedback circuit for a boost converter circuit of fig. 6.

## DETAILED DESCRIPTION OF EMBODIMENTS

In the figures, the same reference numbers indicate elements that are similar in structure and function.

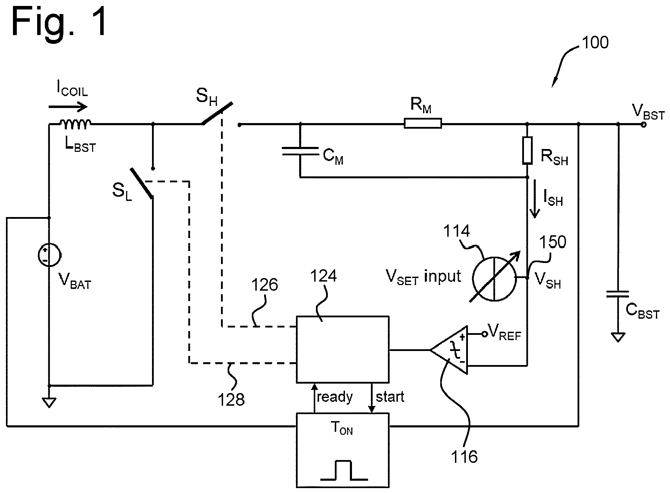

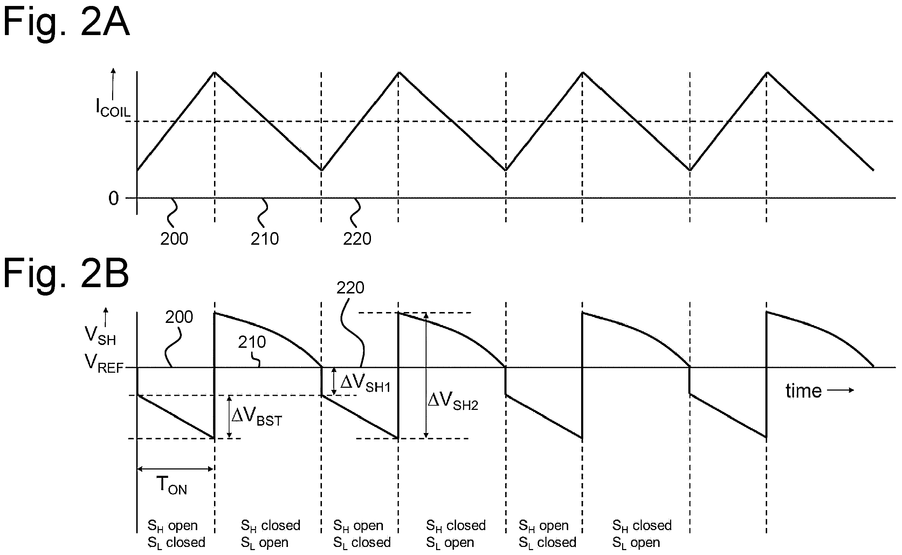

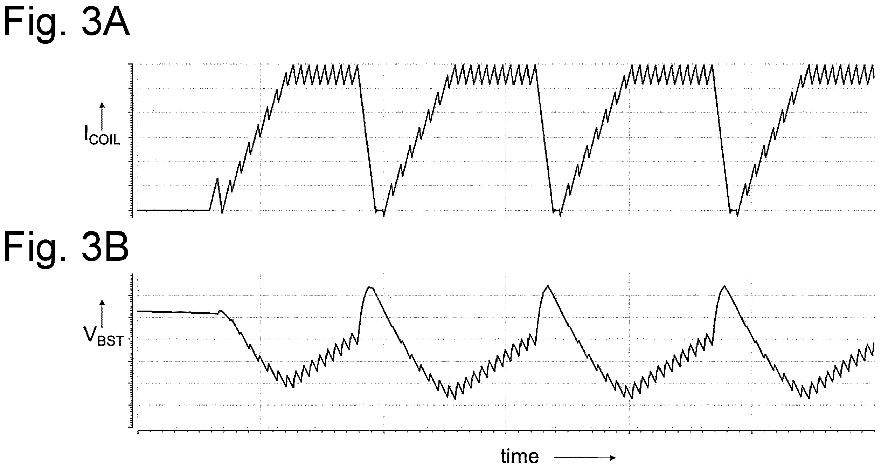

Fig. 1 shows a known boost converter circuit 100. Figs. 2A-B and 3A-B show diagrams of time waveforms of several signals of the boost converter circuit of fig. 1 during operation. The operation of a boost converter circuit will be now explained with reference to Fig. 1, 2A-B, and 3A-B. Figs. 2A-B illustrates the ideal values of $V_{SH}$, and $I_{COIL}$ as a function of time for the different operation states of the boost converter circuit of fig. 1. Figs. 3A-B illustrate the real values of $V_{BST}$, and $I_{COIL}$ as a function of time for the different operation states of the boost converter circuit of fig. 1. The $I_{COIL}$ is the current through the inductor $L_{BST}$. As it can be seen in figs. 2A-B, during the time interval 200 the switch $S_L$ is close and the switch $S_H$ is open in order to connect the inductor $L_{BST}$ to the ground as it can be seen in fig. 1. When the inductor $L_{BST}$ is connected to ground, the boost converter circuit enters into a charging state in which current flows through the inductor $L_{BST}$ and the inductor $L_{BST}$ stores some energy by generating a magnetic field. The current $I_{COIL}$ in the inductor $L_{BST}$ increases during the time interval 200 as it can be seen in fig. 2A. A control unit 124 sends a control signal 128 to open the switch $S_L$ in order to disconnect the inductor $L_{BST}$ from the ground, and a control signal 126 to close the switch $S_H$ in order to connect the inductor $L_{BST}$ to the output $V_{BST}$ via a measurement resistor $R_M$ as it can be seen in fig. 1 and the boost converter circuit enters into a discharging state in which, during the time interval 210, the energy previously accumulated in the inductor $L_{BST}$ is transferred to the output $V_{BST}$ therefore charging the capacitor $C_{BST}$ and the current $I_{COIL}$ in the inductor $L_{BST}$ starts decreasing, as it can be seen in fig. 2A. Time intervals 200 and 210 define in this case a continuous mode event wherein a completed switching cycle has been performed by the circuit. A new continuous mode event starts with time interval 220.

Although the above example has considered that the DCDC circuit worked in a in a continuous mode wherein the current at the inductor $L_{BST}$ does not discharge to zero after each charging period, but it does discharge to a lower energy threshold, the circuit may be working in a DCM mode.

A target output boost voltage $V_{BST}$ for the boost converter circuit of fig. 1 is set by choosing an appropriate value for the current $I_{SH}$ using the adjustable current source 114 as follows:

$$I_{SH} = \frac{V_{BST,TARGET} - V_{REF}}{R_{SH}}$$

In the boost converter circuit of fig. 1, the switch $S_L$ is closed with a frequency f and a duty cycle D that depends on the output voltage $V_{BST}$ and on the input voltage $V_{BAT}$ in a periodic steady state condition with constant load as follows:

$$D = \frac{V_{BST} - V_{BAT}}{V_{BST}}$$

The on-time $T_{ON}$ of the boost converter circuit of fig. 1, i.e., the period of time 200, is related to the frequency f and the duty cycle D in the following way:

$$f = \frac{D}{T_{ON}}$$

This means that, for a fixed value of the on-time $T_{ON}$, the frequency f would depend on the duty cycle D, and therefore on both the input voltage $V_{BAT}$ and the output voltage $V_{BST}$, which is generally not desirable. Therefore, the on-time $T_{ON}$ is usually chosen to depend on the input voltage $V_{BAT}$, the output voltage $V_{BST}$ and the intended switching frequency $f_{TARGET}$ as indicated below:

$$T_{ON} = \frac{V_{BST} - V_{BAT}}{f_{TARGET}\, V_{BST}}$$

The actual switching frequency f will be equal to the intended frequency $f_{TARGET}$ , and independent of the input voltage $V_{BAT}$ and the output voltage $V_{BST}$ as follows:

$$f = \frac{D}{T_{ON}} = \frac{\dfrac{V_{BST} - V_{BAT}}{V_{BST}}}{T_{ON}} = \frac{\dfrac{V_{BST} - V_{BAT}}{V_{BST}}}{\dfrac{V_{BST} - V_{BAT}}{f_{TARGET}\, V_{BST}}} = f_{TARGET}$$

As it can be seen in figs. 2A-B and 3A-B, in a (periodic) steady state under constant load conditions, a step $\Delta V_{SH2}$ in a control voltage $V_{HS}$ at a control node 150 when the switch $S_H$ is switched on or close must be high enough to bring a voltage $V_{SH}$ above the chosen reference voltage $V_{REF}$. Otherwise the comparator 116 will not toggle and the boost converter circuit stops switching, as illustrated in figs. 3A-B. This will occur for high load currents with a large difference $\Delta V_{BST}$ between the highest and the lowest value output voltage $V_{BST}$. In this way, the boost converter circuit must satisfy the following stability condition:

$$\Delta V_{BST} < \Delta V_{SH2} - \Delta V_{SH1}$$

$\Delta V_{SH1}$ represents a step in the control voltage $V_{HS}$ at the control node 150 when the switch $S_H$ is switched off or open. If we called $I_{COIL,MIN}$ to the minimum current in the inductor $L_{BST}$, $I_{COIL,MAX}$ to the maximum current in the inductor $L_{BST}$, and $\Delta I$ to the peak-peak ripple amplitude, i.e. to the difference between the minimum current $I_{COIL,MIN}$ and the maximum current $I_{COIL,MAX}$, then the step $\Delta V_{SH1}$ and the step $\Delta V_{SH2}$ can be defined as follows:

$$\Delta V_{SH1} = I_{COIL,MIN} R_M$$

$$\Delta V_{SH2} = I_{COIL,MAX} R_M$$

Wherein the above definitions of $\Delta V_{SH1}$ and $\Delta V_{SH2}$ leads to:

$$\Delta V_{SH2} - \Delta V_{SH1} = \Delta I\, R_M$$

The peak-peak ripple amplitude $\Delta I$ can be written as a function of the on-time $T_{ON}$, the input voltage $V_{BAT}$ and the inductor $L_{BST}$ as follows:

$$\Delta I = \frac{V_{BAT}}{L_{BST}}\, T_{ON}$$

A load current $I_{LOAD}$ and an output capacitance $C_{BST}$ determine the voltage drop $\Delta V_{BST}$ of the output voltage $V_{BST}$ during the on-time $T_{ON}$ in the following way:

$$\Delta V_{BST} = \frac{T_{ON} I_{LOAD}}{C_{BST}}$$

In this way, the stability condition can be rewritten as:

$$\frac{R_M C_{BST} V_{BAT}}{L_{BST}} > I_{LOAD}$$

It can be seen and already said, in the boost converter circuit shown in fig. 1, for a given inductor $L_{BST}$ and a given input voltage $V_{BAT}$, the above stability criteria depends on the values of the measurement resistance $R_M$ and the output capacitor $C_{BST}$. However, high values of the measurement resistance $R_M$ implies high energy dissipation and therefore to an inefficient boost converter circuit, and output capacitor $C_{BST}$ with a high value are expensive.

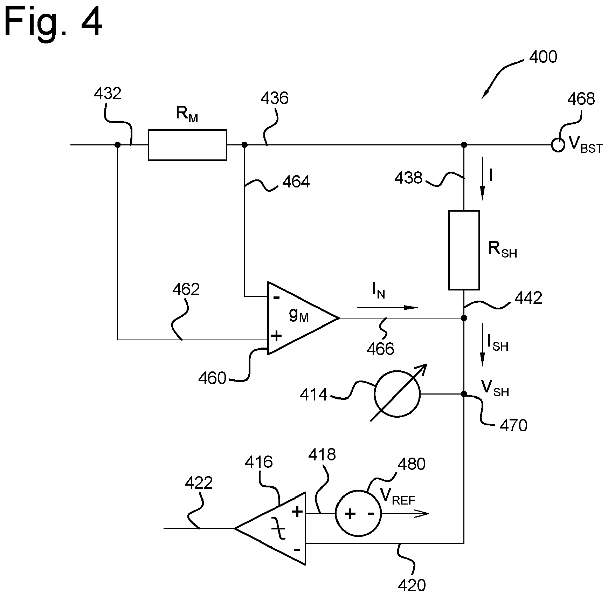

Fig. 4 shows a feedback circuit 400 according to an embodiment of the invention. The feedback circuit of fig. 4 comprises a measurement resistance $R_M$, a feedback resistor $R_{SH}$, and an adjustable current source 414 configured to receive as an input a voltage $V_{SET}$ and to provide as output a current $I_{SH}$ such that a voltage $V_{SH}$ is adjusted to the required value $V_{SET}$. The feedback circuit of fig. 4 further comprises a comparison circuit 416 comprising a first comparison input 418, a second comparison input 420 and an comparison output 422 wherein the comparison circuit 416 is configured to receive from a voltage source 480 a reference voltage $V_{REF}$ at the first comparison input 418, the voltage $V_{SH}$ at the second comparison input 420 and to generate a comparison result at the comparison output 422 based on comparing the first comparison input 418 and the second comparison input 420. The feedback circuit of fig. 4 may be further configured to send the comparison output 422 to a control circuit of a boost converter circuit (not shown in fig. 4) such that the control circuit generates a control signal based on the comparison circuit in order to control the switching of the boost converter circuit.

The feedback circuit of fig. 4 comprises also a gain circuit having a $g_M$ stage and comprising a voltage controlled current source 460 comprising a first gain input 462 connected at a first end 432 of the measurement resistance, a second gain input 464 connected at a second end 436 of the measurement resistance and a gain output 466 configured to provide a current $I_M$ based on voltage sensed at the first and second gain inputs. Furthermore, the feedback resistance $R_{SH}$ comprises a first end 438 connected to the second end 436 of the measurement resistance and a second end 442 connected to the gain output 466, to the adjustable current source 414, and to the second comparison input 420.

In fig. 4, the programmable current $I_{SH}$ defines a target boost voltage at the output terminal 468 of the boost converter circuit. The target boost voltage is defined by:

$$V_{BST,TARGET} = V_{REF} + I_{SH}\, R_{SH}$$

The voltage $V_{SH}$ at the feedback node 470 relates to the output voltage $V_{BST}$ as follows:

$$V_{SH} = V_{BST} - I_{SH}\, R_{SH} + I_M\, R_{SH}$$

When the boost converter circuit is in a charging state wherein an inductor is storing energy, the current $I_M$ at the gain output 466 is zero and therefore the voltage $V_{SH}$ is close to the reference voltage $V_{REF}$ when the system is in control.

When the boost converter circuit is in a discharging state wherein an inductor is releasing energy, an inductor current $I_{COIL}$ will flow through the measurement resistance $R_M$ and a current $I_M$ at the gain output 466 is not equal to zero. The product $I_M\, R_{SH}$ acts as a feedback signal $V_{FB}$ that can be defined as:

$$V_{SH} = V_{BST} - I_{SH}\, R_{SH} + g_M\, R_M\, I_{COIL}\, R_{SH} = V_{BST} - I_{SH}\, R_{SH} + V_{FB}$$

The feedback signal $V_{FB}$ is the variation on the voltage $V_{SH}$ generated by the $g_M$ stage of the gain circuit 460 in combination with the feedback resistance $R_{SH}$ such that:

$$V_{FB} = I_M\, R_{SH} = g_M\, R_M\, I_{COIL}\, R_{SH}$$

The feedback signal in the known boost converter circuit shown in fig. 1 can be expressed as:

$$V_{FB} = R_M\, I_{COIL}$$

In this way, the feedback circuit of fig. 4 has introduced a gain compared to the known boost converter circuit shown of fig. 1 equal to:

$$\text{gain} = g_M \, R_{SH}$$

The voltage controlled current source $g_M$ in combination with the feedback resistance $R_{SH}$ required to program the target output voltage creates the gain factor.

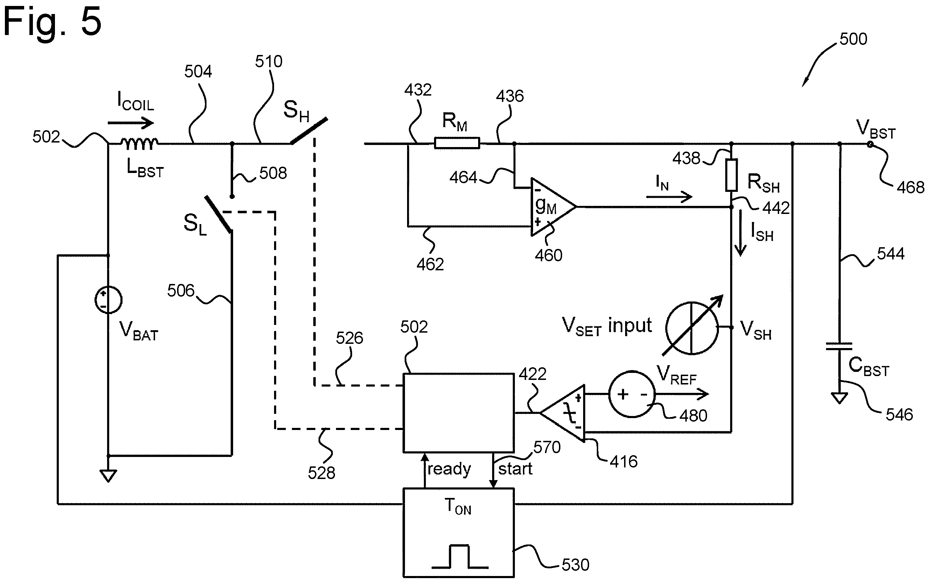

Fig. 5 shows a boost converter circuit 500 comprising the feedback circuit of fig. 4.

The boost converter circuit 500 of fig. 5 comprises an inductor $L_{BST}$ connected to an input terminal receiving an input voltage $V_{BAT}$, which may correspond, for instance, to battery, such that an output voltage $V_{BST}$ is provided at the output terminal 468 of the boost converter circuit based on the input voltage $V_{BAT}$, wherein typically $V_{BST} < V_{BAT}$. The boost converter circuit of fig. 5 further comprises a switching circuit comprising switches $S_L$ and $S_H$. The boost converter circuit of fig. 5 further comprises a control circuit 502 configured to receive the comparison output 422 of the comparison circuit 416 and to generate a first control signal 526 and a second control signal 528 based on the comparison output 422 of the comparison circuit 416. The first control signal 526 is configured to control the switch $S_L$ to open or close and the second control signal 528 is configured to control the switch $S_H$ to open or close. Furthermore the boost converter circuit of fig. 5 comprises a pulse signal circuit 530 configured to provide an on-time signal to the boost converter circuit based on a third control signal 570 generated by the control unit 502.

In the example of fig. 5, the inductor $L_{BST}$ comprises a first end 502 and a second end 504 such that the first end 502 of the inductor $L_{BST}$ is connected to the input voltage $V_{BAT}$ and the second end 504 of the inductor $L_{BST}$ is connected to the switch $S_L$ and to the switch $S_H$. The switch $S_L$ comprises a first end 506 and a second end 508. The first end 506 of the switch $S_L$ is connected to ground and the second end 508 of the switch $S_L$ is connected to the second end 504 of the inductor $L_{BST}$. The switch $S_H$ comprises a first end 510 and a second end 512. The first end 510 of the switch $S_H$ is connected to the second end 504 of the inductor $L_{BST}$ and the second end 512 of the switch $S_H$ is connected to the first end 432 of the measurement resistor $R_M$ and to the first gain input 462 of the voltage controlled current source 460. The switches $S_1$ and $S_2$ may be implemented with any kind of suitable switching device, for example, a transistor, a diode, etc.

As illustrated in fig. 5, the boost converter circuit may comprise a capacitor $C_{BST}$ having a first end 544 and a second end 546 wherein the first end 544 of the capacitor $C_{BST}$ is connected to the output voltage $V_{BST}$ of the boost circuit and the second end 546 of the capacitor $C_{BST}$ is connected to ground.

The control unit 502 is configured to generate the first control signal 526 and/or the second control signal 528 in order to control the switching of $S_H$ and/or $S_L$ based on the comparison output 422 generated by the comparison circuit 416. The control unit 502 is also configured to generate the third control signal 570 in order to control the pulse generator circuit 530 based on the comparison output 422 generated by the comparison circuit 416.

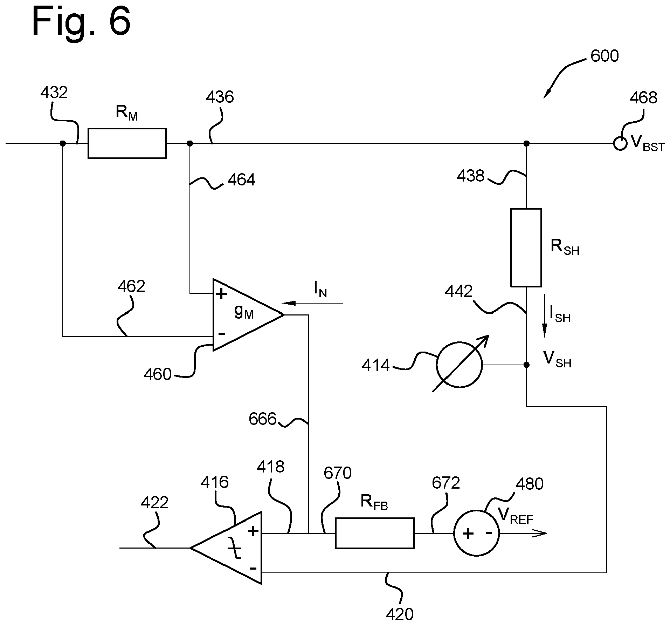

Fig. 6 shows a feedback circuit 600 according to another embodiment of the invention.

In fig. 6, the same reference numbers as in fig. 4 have been used to refer to similar elements. Furthermore, the feedback circuit 600 of fig. 6 comprises another feedback resistance $R_{FB}$. The feedback resistance $R_{FB}$ comprises a first end 670 and a second end 672 wherein the first end 670 of the feedback resistance $R_{FB}$ is connected to the first comparison input 418 of the comparison circuit 416. The gain output 666 of the voltage controlled current source 460 is now also connected to the first comparison input 418 of the comparison circuit 416 such that a current $I_N$ is provided based on voltage sensed at the first and second gain inputs. Furthermore, the second end 672 of the feedback resistance $R_{FB}$ is connected to the voltage source 480.

In this way, an inverse feedback voltage is added at the first comparison input 418 using the feedback resistance $R_{FB}$. If the feedback resistance $R_{FB}$ has a value identical to the value of the other feedback resistance $R_{SH}$, the effect is identical as in the feedback circuit of figure 4. The advantage of the feedback circuit 600 of fig. 6 is that the value $g_M$ for the $g_M$ stage of the gain circuit 460 and the value of the feedback resistance $R_{FB}$ can be chosen independent of the value of the feedback resistance $R_{SH}$. However, the voltage source 480 providing $V_{REF}$ must be able to sink the current $I_N$.

The feedback voltage in fig. 6 can be represented as $V_{FB} = g_M \, R_M \, I_{COIL} \, R_{FB}$.

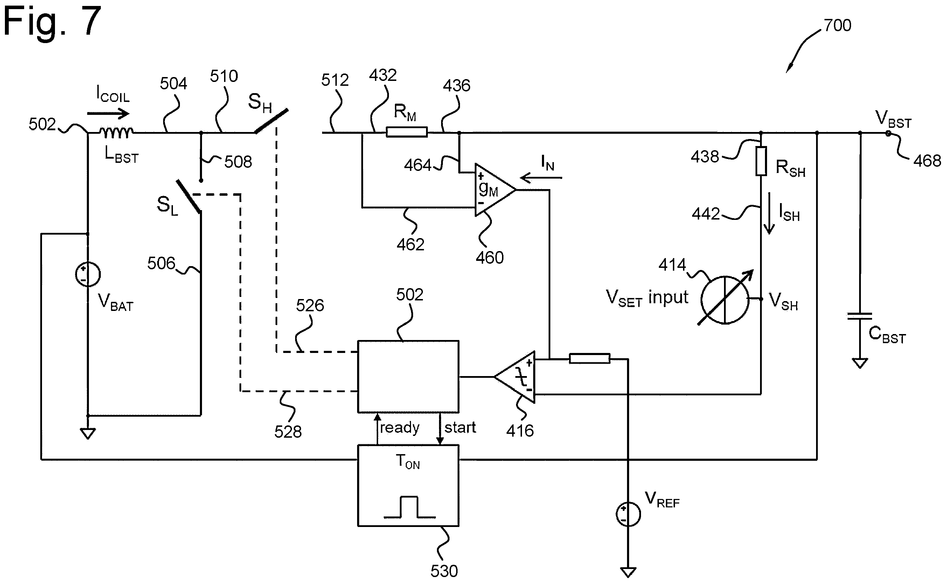

Fig. 7 shows a boost converter circuit 700 similar to the boost converter circuit 500 of fig. 5 but comprising the feedback circuit 600 of fig. 6. The boost converter circuit 700 of fig. 7 also operates similar to the boost converter circuit 500 of fig. 5 but with a feedback voltage $V_{FB} = g_M \, R_M \, I_{COIL} \, R_{FB}$.

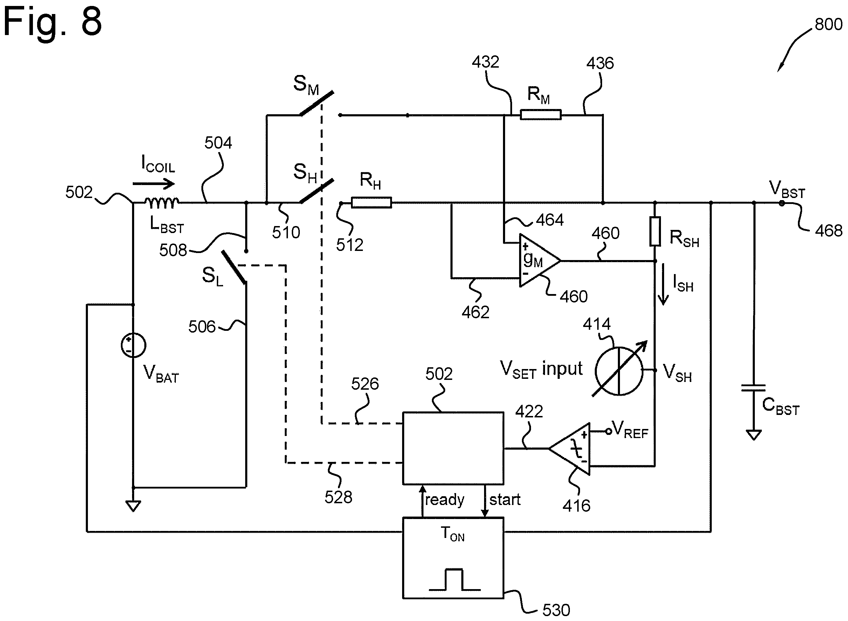

Fig. 8 shows a boost converter circuit 800 according to another embodiment of the invention. The boost converter circuit 800 further comprises a measurement switch $S_M$ in series with the measurement resistance $R_M$. Furthermore, the measurement switch $S_M$ and the measurement resistance $R_M$ are connected in parallel with the switch $S_H$ of the boost converter circuit 800. The switch $S_H$ comprises an on-resistance $R_H$ when the first switch $S_H$ is closed, such that the mesurement switch $S_M$ and the switch $S_H$ of the boost converter circuit 800 are configured to open and close at the same time. In this way, measurement resistance $R_M$ is located out of the high current path avoding loss of energy at said measurement resistance $R_M$. The on-resistance $R_H$ of the switch $S_H$ which is reused. The measurement switch $S_M$

switches simultaneously with switch $S_H$ such that the voltage across the switch $S_H$ and the on-resistance $R_H$ is sensed when both switches $S_H$ and $S_M$ are closed. The measurement resistance $R_M$ can be chosen much larger so that the power loss in the measurement resistance $R_M$ can be neglected. For instance, for a boost converter circuit 800 with a switch resistance $R_H$ in the range of 10-100 miliohms, the measurement resistance $R_M$ can be chosen in the kiloohms range. When both switches $S_H$ and $S_M$ are closed the voltage across the measurement resistance $R_M$ is equal to

$$V_{R_M} = I_{COIL} R_H$$

When both switches $S_H$ and $S_M$ are open, $V_{BST}$ is sensed, so the voltage across the measurement resistance $R_M$ is zero:

$$V_{R_M} = 0$$

The boost converter circuit 800 of fig. 8 further comprises a feedback circuit as the one shown in fig. 5 wherein the first gain input 462 and the second gain input 464 of the gain circuit 460 are respectively connected to the second end 436 of the measurement resistance $R_M$ and to the first end 432 of the measurement resistance $R_M$. The value of $g_M$ can now be chosen in such a way that the output current of the $g_M$ stage is higher than the current through the original capacitor $C_M$ that was replaced. Therefore, the voltage step $\Delta V$ at the feedback node $V_{SH}$ can be scaled:

$$\Delta V = I_{COIL} R_H \, g_M \, R_{SH}$$

For $g_M = 1/R_{SH}$, a gain of 1 is achieved compared to the situation with the use of the capacitor. For higher values of $g_M$, the feedback current is higher and has the same effect as a higher measurement resistance. The feedback gain can be defined as:

$$gain = g_M \, R_{SH}$$

The stability requirement now includes the gain such that:

$$gain \, \frac{R_{SH} C_{BST} V_{BAT}}{L_{BST}} > I_{LOAD}$$

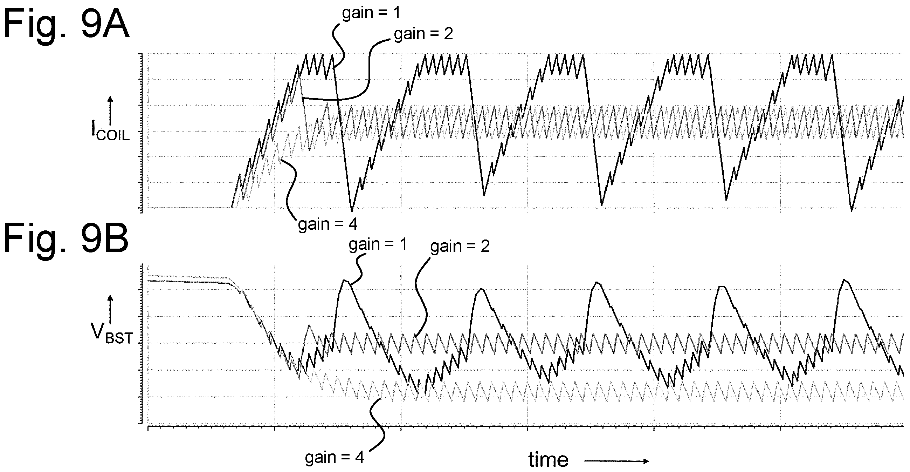

Figs. 9A-B show time diagrams of the waveforms of several signals of the boost converter circuit 800 of fig. 8 during operation. Specifically, figs. 9A-B show the values of the inductor current $I_{COIL}$ and the output voltage $V_{BST}$ of the boost converter circuit 800 of fig. 8 as a function of time for three different gains, namely for gain 1, 2 and 4. For reference, the case with gain =1 is added. This resembles the prior art situation using a capacitor that hits the maximum current limit. Clearly, the feedback gain can now be used to stabilize the boost converter circuit for operating conditions that would not be possible without it. Note that the higher feedback gain setting results also in a higher output resistance in the same way as a higher measurement resistance would do because it increases the ripple voltage amplitude on the feedback node $V_{SH}$.

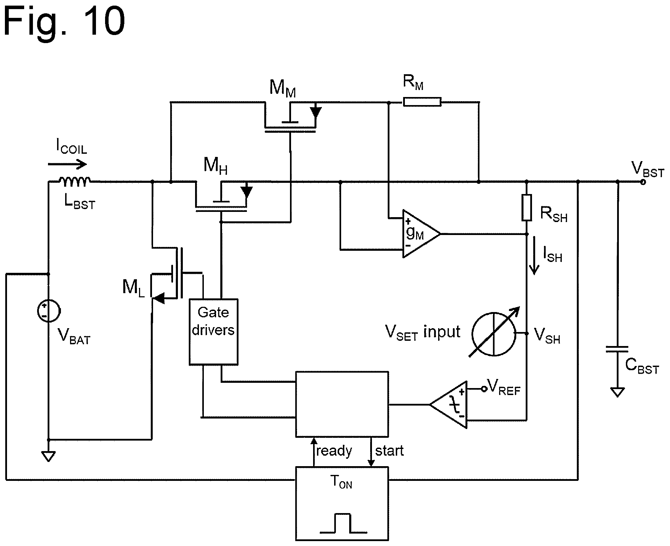

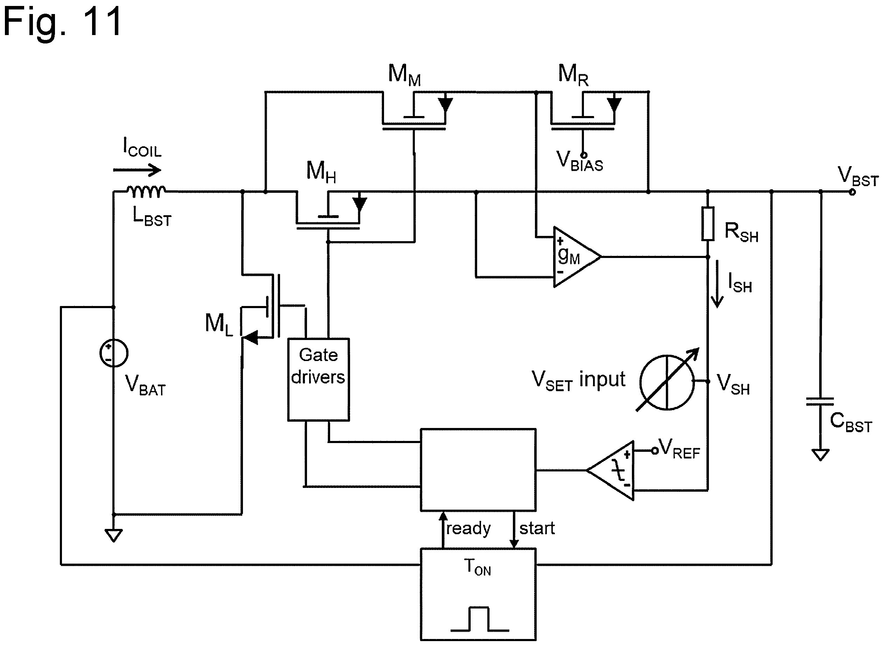

Figs. 10 and 11 show possible implementations of the boost converter circuit 800 of fig. 8. The switches in the boost converter circuit may be implemented with transistors. An example of a complementary power stage using NMOS and PMOS transistors can be seen in figure 9A where the switch $S_L$ is implemented with NMOS transistor $M_L$, switch $S_H$ is implemented with PMOS transistor $M_H$ and switch $S_M$ is implemented with a transistor $M_M$ that can be the same type of PMOS transistor as $M_H$ so that the gate drive of $M_H$ and $M_M$ can be combined. Since $M_M$ has a certain on-resistance, the voltage at the input of the $g_M$ stage is a fraction of the drain-source voltage of $M_H$ determined by the resistive divider formed by $M_M$ and $R_M$.

$R_M$ can also be implemented with a PMOS transistor $M_R$ as can be seen in figure 11. When $V_{BIAS}$ is equal to the gate voltage of $M_H$ in on-state, $M_M$ and $M_R$ again form a resistive divider that determines the fraction of the voltage across $M_H$ that is driving the gm stage. The advantage of this method is that this fraction is independent of process variation and temperature since the same type of components are used for switch and resistance. The same method can be used for an implementation where $M_H$, $M_M$ and $M_R$ are NMOS transistors (in a full NMOS power stage).

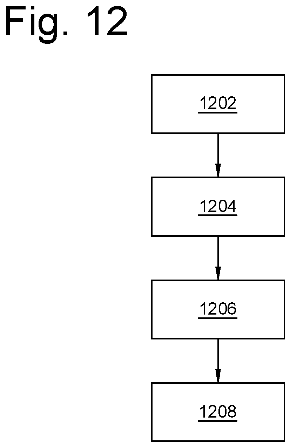

Fig. 12 shows a flowchart of a method of operating the feedback circuit for a boost converter circuit of fig. 6. The method of fig. 6 comprises a step 1202 of receiving, at the measurement resistance $R_M$, the current $I_{COIL}$. At step 2004, the method receives, at the gain circuit 460, a sensed voltage associated to the measurement resistance and proceeds to step 1206. Step 1206 comprises providing, at the gain output 466 of the gain circuit, a gain signal generated based on the sensed voltage. Finally, the method of fig. 12 comprises a step 1208 of generating, at the comparison output 422 of the comparison circuit 416, a comparison signal, wherein the comparison signal is generated based on the gain signal, a voltage drop across the feedback resistance ($R_{SH}$) and a reference signal ($V_{REF}$).

The examples and embodiments described herein serve to illustrate rather than limit the invention. The person skilled in the art will be able to design alternative embodiments without departing from the scope of the claims. Reference signs placed in parentheses in the claims shall not be interpreted to limit the scope of the claims. Items described as separate entities in the claims or the description may be implemented as a single hardware or software item combining the features of the items described.

**Claims**

1. A feedback circuit for a boost converter circuit wherein the feedback circuit comprises:

   a measurement resistance ($R_M$) configured to receive a current ($I_{COIL}$);
   a feedback resistance ($R_{SH}$);
   a gain circuit (460) comprising a gain output (466) and configured to receive a sensed voltage associated to the measurement resistance, and to provide, at the gain output (466; 666), a gain signal generated based on the sensed voltage; and
   a comparison circuit (416) comprising a comparison output (422), and configured to generate a comparison signal, at the comparison output (422), wherein the comparison signal is generated based on the gain signal, a voltage drop across the feedback resistance ($R_{SH}$) and a reference signal ($V_{REF}$).

2. The feedback circuit according to claim 1, wherein the measurement resistance ($R_M$) comprises a first end (432) and a second end (436), the gain circuit (460) comprises a first gain input (462) and a second gain input (464) and wherein the gain circuit (460) is configured to receive, at the first gain input (462), a first voltage sensed at the first end (432) of the measurement resistance, to receive, at the second gain input (464), a second voltage sensed at the second end (436) of the measurement resistance, and to provide, at the gain output (466), the sensed voltage generated based on the first sensed voltage and the second sensed voltage.

3. The feedback circuit according to claim 2, wherein the feedback resistance $R_{SH}$ comprises a first end (438) and a second end (442) and wherein the first end (438) of the feedback resistance ($R_{SH}$) is coupled to the second end (436) of the measurement resistance, the second end (442) of the feedback resistance ($R_{SH}$) is coupled to the comparison circuit (426) and the gain output (466) is coupled to the comparison circuit.

4. The feedback circuit according to any of the previous claims, wherein the comparison circuit (416) comprises a first comparison input (418), a second comparison input (420) and a comparison output (422), wherein the comparison circuit is configured to receive the reference voltage at the first input, to receive a feedback signal at the second input, and to generate the comparison signal by comparing the feedback signal and the reference signal ($V_{REF}$), wherein the feedback signal is based on the gain signal and the voltage drop across the feedback resistance ($R_{SH}$).

5. The feedback circuit according to claim 4, wherein the gain output (466) is coupled to the second end (442) of the feedback resistance ($R_{SH}$) and to the second comparison input (420).

6. The feedback circuit according to any of claims 1-3, further comprising another feedback resistance ($R_{FB}$) configured to receive the gain signal wherein the comparison circuit (416) comprises a first comparison input (418), a second comparison input (420) and a comparison output (422), wherein the comparison circuit (416) is configured to receive, at the first comparison input (418), the sum of the reference voltage ($V_{REF}$) and a further voltage drop caused by the gain signal across the another feedback resistance ($R_{FB}$), to receive the voltage drop across the feedback resistance ($R_{SH}$) at the second comparison input (420) and to generate the comparison signal by comparing the sum of the reference voltage and the further voltage drop with the voltage drop across the feedback resistance ($R_{SH}$).

7. The feedback circuit according to claim 6, wherein the another feedback resistance ($R_{FB}$) comprises a first end (670) and a second end (672) wherein the first comparison input (418) is coupled to the first end (670) of the another feedback resistance ($R_{FB}$) and to the gain output (666) and wherein the second end (672) of the another feedback resistance ($R_{FB}$) is coupled to the reference voltage ($V_{REF}$).

8. The feedback circuit according to any of the previous claims, wherein the gain circuit (460) comprises a voltage controlled current source.

9. The feedback circuit according to any of the previous claims, wherein the first end (438) of the feedback resistance ($R_{SH}$) is coupled to an output terminal ($V_{BST}$) of the boost converter.

10. The feedback circuit according to any of the previous claims, further comprising a measurement switch ($S_M$) wherein the measurement switch ($S_M$) and the measurement resistance ($R_M$) are coupled in series, wherein the measurement switch ($S_M$) and the measurement resistance ($R_M$) are coupled in parallel with a first switch ($S_H$) of the boost converter, wherein the first switch ($S_H$) comprises an on-resistance ($R_H$) when the first switch ($S_H$) is closed, and wherein the feedback switch ($S_M$) and the first switch ($S_H$) of the boost converter circuit are configured to open and close at the same time.

11. The feedback circuit according to any of the previous claims further comprising an adjustable current source (414) coupled to the second end (442) of the feedback resistance ($R_{SH}$) and to the second comparison input (420) of the comparison circuit (416).

12. A boost converter circuit comprising:

the feedback circuit according to any of claims 1-11;
an inductor ($L_{BST}$);
an input terminal configured to receive an input voltage ($V_{BAT}$);
an output terminal configured to provide an output voltage ($V_{BST}$);
a control circuit (502) configured to switch the circuit to perform cycles wherein each cycle comprises an energy discharging state in which the inductor provides energy to the output terminal and an energy charging state in which the inductor stores energy provided by the input voltage; wherein the control circuit is configured to switch the boost converter circuit based on the comparison signal.

13. The boost converter circuit of claim 12, wherein the inductor ($L_{BST}$) comprises a first end (502) and a second end (504), wherein the first end (502) is coupled to the input terminal, and wherein the control circuit (502) comprises a first switch ($S_L$) comprising a first end (508) connected to the second end (504) of the inductor ($L_{BST}$) and a second end (510) connected to ground and wherein the first switch ($S_L$) is configured to connect the inductor ($L_{BST}$) to the ground such that the inductor ($L_{BST}$) enters into a charging state, and to disconnect the inductor from the ground.

14. The boost converter circuit according to claim 13, wherein the switching circuit further comprises a second switch ($S_H$) having a first end (510) coupled to the second end (504) of the inductor ($L_{BST}$), and having a second end (512) coupled to the output terminal and wherein the second switch ($S_H$) is configured to couple the inductor ($L_{BST}$) to the output terminal such that the energy storage element ($L_{BST}$) enters into a discharging state.

15. A method of operating a feedback circuit for a boost converter circuit, the method comprising the steps of

receiving, at a measurement resistance ($R_M$), a current ($I_{COIL}$);
receiving, at a gain circuit (460), a sensed voltage associated to the measurement resistance;
providing, at a gain output (466; 666) of the gain circuit, a gain signal generated based on the sensed voltage; and

generating, at a comparison output (422) of a comparison circuit (416), a comparison signal, wherein the comparison signal is generated based on the gain signal, a voltage drop across the feedback resistance ($R_{SH}$) and a reference signal ($V_{REF}$).

# Fig. 1

EP 4 195 482 A1

# Fig. 2A

$I_{COIL}$

0

200   210   220

# Fig. 2B

220

$V_{SH}$
$V_{REF}$

200

210

$\Delta V_{SH1}$

$\Delta V_{SH2}$

$\Delta V_{BST}$

$T_{ON}$

time →

| $S_H$ open $S_L$ closed | $S_H$ closed $S_L$ open | $S_H$ open $S_L$ closed | $S_H$ closed $S_L$ open | $S_H$ open $S_L$ closed | $S_H$ closed $S_L$ open |

# Fig. 3A

$I_{COIL}$

# Fig. 3B

$V_{BST}$

time ⟶

EP 4 195 482 A1

# Fig. 4

Fig. 5

$V_{BST}$ 468

500

544

$C_{BST}$ 546

$R_{SH}$ 442 $I_{SH}$

438 $I_N$

$V_{SH}$

$V_{SET}$ input

$V_{REF}$ 480

436

432 $R_M$

464 $g_M$ 460

462 416

422 570

502 start

530

526 $T_{ON}$

528 ready

$S_H$ 510

508 504

$S_L$ 506

$I_{COIL}$

$L_{BST}$ 502

$V_{BAT}$

# Fig. 6

# Fig. 7

EP 4 195 482 A1

Fig. 8

Fig. 9A

gain = 1
gain = 2

$I_{COIL}$

gain = 4

Fig. 9B

gain = 1    gain = 2

$V_{BST}$

gain = 4

time

EP 4 195 482 A1

Fig. 10

Fig. 11

# Fig. 12

```
┌──────────────┐
│    1202      │
└──────────────┘
        │
        ▼
┌──────────────┐
│    1204      │
└──────────────┘
        │
        ▼
┌──────────────┐
│    1206      │
└──────────────┘
        │
        ▼
┌──────────────┐
│    1208      │
└──────────────┘
```

Europäisches
Patentamt

European
Patent Office

Office européen
des brevets

# EUROPEAN SEARCH REPORT

Application Number

EP 21 21 3515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 3 188 350 A1 (ASNER ELECTRONIC CO LTD [TW]) 5 July 2017 (2017-07-05)<br>* paragraphs [0015], [0016], [0023], [0024]; figures 2B,4A, 4B, 6 * | 1-7,9, 12,13,15<br>8,10,11, 14 | INV.<br>H02M3/156<br>H02M3/158<br>H02M1/00<br>H02M1/15<br>H02M1/42 |
| X | US 2014/347027 A1 (JAYARAJ VINIT [US] ET AL) 27 November 2014 (2014-11-27)<br>* paragraphs [0045], [0047]; figure 4 * | 1,15 | |
| X | US 2014/375288 A1 (NORA PAOLO [IT]) 25 December 2014 (2014-12-25)<br>* paragraphs [0002], [0020], [0028]; figures 1-4 * | 1,15 | |
| X<br>Y | US 2018/331618 A1 (ENGELHARDT MICHAEL T [US] ET AL) 15 November 2018 (2018-11-15)<br>* paragraphs [0030], [0043]; figure 3 * | 1,15<br>8,11 | |
| X | US 2009/066301 A1 (OSWALD RICHARD [US] ET AL) 12 March 2009 (2009-03-12)<br>* paragraphs [0032], [0033], [0046]; figure 2 * | 1,15 | |
| X | CN 207 994 931 U (CHENGDU XIXIN TECH CO LTD) 19 October 2018 (2018-10-19)<br>* abstract; figure 1 * | 1,15 | TECHNICAL FIELDS SEARCHED (IPC)<br><br>H02M |
| Y | US 2009/295353 A1 (DE LIMA FILHO JADER ALVES [BR] ET AL) 3 December 2009 (2009-12-03)<br>* paragraphs [0012], [0017], [0024]; figures 1,2 * | 10,14 | |

The present search report has been drawn up for all claims

| Place of search | Date of completion of the search | Examiner |
|---|---|---|
| The Hague | 17 May 2022 | Kanelis, Konstantin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## EP 4 195 482 A1

## ANNEX TO THE EUROPEAN SEARCH REPORT
## ON EUROPEAN PATENT APPLICATION NO.

EP 21 21 3515

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2022

| Patent document cited in search report | | Publication date | Patent family member(s) | | Publication date |
|---|---|---|---|---|---|
| EP 3188350 | A1 | 05-07-2017 | CN | 106936295 A | 07-07-2017 |
| | | | CN | 205829445 U | 21-12-2016 |
| | | | EP | 3188350 A1 | 05-07-2017 |
| | | | ES | 2703862 T3 | 12-03-2019 |
| | | | JP | 6731764 B2 | 29-07-2020 |
| | | | JP | 2017121157 A | 06-07-2017 |
| | | | TW | 201724684 A | 01-07-2017 |
| | | | US | 2017187301 A1 | 29-06-2017 |
| US 2014347027 | A1 | 27-11-2014 | NONE | | |
| US 2014375288 | A1 | 25-12-2014 | CN | 104283423 A | 14-01-2015 |
| | | | US | 2014375288 A1 | 25-12-2014 |
| US 2018331618 | A1 | 15-11-2018 | NONE | | |
| US 2009066301 | A1 | 12-03-2009 | JP | 5502970 B2 | 28-05-2014 |
| | | | JP | 2009081988 A | 16-04-2009 |
| | | | JP | 2013059252 A | 28-03-2013 |
| | | | US | 2009066301 A1 | 12-03-2009 |
| CN 207994931 | U | 19-10-2018 | NONE | | |
| US 2009295353 | A1 | 03-12-2009 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIAORU XU ; XIAOBO WU ; XIAOLANG YAN.** A Quasi Fixed Frequency Constant On Time Controlled Boost Converter. *IEEE International Symposium on Circuits and Systems, ISCAS,* 2008

- **JINPING WANG ; LIANGKUI HOU ; LIANG ZHANG ; SHENG XIANG ; YIGANG HE.** Analysis of the Low-frequency Oscillation Phenomenon in Constant-on-time Controlled Boost Converter. *IEEE Energy Conversion Congress and Exposition, ECCE,* 2015